# EUROPÄISCHE PATENTSCHRIFT

(11) **EP 2 795 376 B1**
(45) Veröffentlichungstag und Bekanntmachung des Hinweises auf die Patenterteilung: **05.05.2021**
(21) Anmeldenummer: 12812857.6
(22) Anmeldetag: 19.12.2012
(51) Int. Cl.: G02B 5/08, B44F 1/04, B42D 15/00, G02B 5/18, G02B 27/60

(54) **SICHERHEITSELEMENT FÜR SICHERHEITSPAPIERE, WERTDOKUMENTE ODER DERGLEICHEN**
SECURITY ELEMENT FOR SECURITY PAPERS, DOCUMENTS OF VALUE, OR SIMILAR
ÉLÉMENT DE SÉCURITÉ POUR PAPIERS DE SÉCURITÉ, DOCUMENTS DE VALEURS OU SIMILAIRES

(30) Priorität: 20.12.2011 DE 102011121588
(43) Veröffentlichungstag der Anmeldung: 29.10.2014
(73) Patentinhaber: Giesecke+Devrient Currency Technology GmbH, 81677 München (DE)
(72) Erfinder: LOCHBIHLER, Hans, 80337 München (DE)
(74) Vertreter: Breit, Ulrich
(86) Internationale Anmeldenummer: PCT/EP2012/005275
(87) Internationale Veröffentlichungsnummer: WO 2013/091858

(56) Entgegenhaltungen:
- WO-A1-2005/095119
- WO-A2-2005/106601
- DE-A1-102006 050 047

## Beschreibung

Die Erfindung bezieht sich auf ein Sicherheitselement zur Herstellung von Wertdokumenten, wie Banknoten, Schecks oder dergleichen, das eine Oberseite aufweist, die mehrere Mikrobilder bereitstellt.

Die Erfindung bezieht sich weiter auf ein Wertdokument mit einem solchen Sicherheitselement.

Die Erfindung bezieht sich auch auf ein Herstellungsverfahren für ein Sicherheitselement für Wertdokumente, wie Banknoten, Schecks oder dergleichen, wobei ein Substrat bereitgestellt wird, das eine Oberseite aufweist, und auf der Oberseite mehrere Mikrobilder erzeugt werden.

Solche Mikrobilder werden insbesondere für Moire-Vergrößerungsanordnungen benötigt. Dort ist über den Mikrobildern zu deren Vergrößerung eine Linsenanordnung ausgebildet und jedem Mikrobild eine Linse zugeordnet. Die Mikrobilder werden durch die in einem Raster darüber befindlichen Mikrolinsen so abgebildet, dass ein Betrachter das Mikrobild durch ein Moire-Muster vergrößert wahrnimmt. Moire-Anordnungen, welche sich als Sicherheitselemente, beispielsweise für Banknoten, eignen, dürfen gegenüber der Dicke des Substrates, z. B. Banknotenpapier, nicht merklich auftragen. Daraus ergibt sich eine Limitierung der maximalen Linsengröße, welche wiederum die Größe der darunter liegenden Mikrobilder beschränkt. Die praktikable Fläche eines jeden Mikrobildes liegt zwischen 20 x 20 µm² und 30 x 30 µm². Eine Untergrenze für den Linsendurchmesser und die Größe der Mikrobilder ist durch die Wellennatur des Lichtes gegeben, da mit abnehmenden Strukturgrößen für Linsen und Mikrobilder die Lichtstreuung zunimmt und sich die Abbildungseigenschaften verschlechtern. Auch nimmt mit abnehmender Größe der Mikrobilder der Herstellungsaufwand zu, wenn die Mikrobilder nicht an Detailgenauigkeit verlieren sollen.

Mikrobilder werden aber auch zur möglichst unauffälligen Kennzeichnung von Wertdokumenten eingesetzt, dann natürlich ohne integrierte Vergrößerungsanordnung.

Die Gestaltung von Mikrobildern für Moire-Vergrößerungsanordnungen ist im Stand der Technik bereits in vieler Hinsicht diskutiert.

Die EP 1434695 B1 beschreibt eine absorbierende Struktur mit einer Periode kleiner als die Lichtwellenlänge. Die Struktur ist als Kreuzgitter mit sinusförmigem Profil aufgebaut.

Die WO 2005/106601 A2 betrifft Moire-Vergrößerungsanordnungen mit Mikrobildern, welche aus antireflektierenden Bereichen und teilweise reflektierenden Bereichen bestehen. Die antireflektierende Fläche wird durch Nanostrukturen mit einer Periode kleiner als 700 nm und einer Tiefe zwischen 150 und 350 nm gebildet.

In der EP 1979768 A1 sind Mehrschichtkörper mit Mikrolinsenanordnung erläutert, bei denen Mikrobilder durch Mikrolöcher bzw. durch Bereiche mit unterschiedlicher Opazität erzeugt werden.

In der EP 1182054 B1 werden Retroreflektoren Mikrolinsen zugeordnet, um Abbildungsfehler der Moiré-Anordnung zu minimieren.

In der WO 2011/029602 A2 sind gewölbte Mikrobilder vorgesehen, um Abbildungsfehler bei Mikrolinsenanordnungen zu vermeiden. Die Strukturierung der Mikrobilder erfolgt durch diffraktive Reliefstrukturen wie Beugungsgitter oder Hologramme, Beugungsstrukturen nullter Ordnung, Mattstrukturen oder Mottenaugenstrukturen.

Die WO 2002/101669 A2 beschreibt Mikrobilder, welche durch feine Punkte oder Perforationen gebildet werden.

Die EP 1476317 A1 sowie die US 7468842 B2 beschreiben konkave bzw. konvexe Oberflächen, Bildelemente als Reliefoberflächen, welche mit Farbe gefüllt werden, und "light trap patterns", gebildet durch Sub-Wellenlängenstrukturen, zur Erzeugung von Mikrobildern für Moire-Vergrößerungsanordnungen.

In der WO 2010/048015 A1 schließlich ist ein Verfahren zur Herstellung von Mikrobildern für Moire-Vergrößerungsanordnungen beschrieben, bei welchem eine strahlungsempfindliche Donor-Schicht teilweise abgetragen bzw. übertragen wird, um eine laterale Strukturierung der Schicht zu bewirken.

Aus der DE 102008046128 A1 ist eine Mattstruktur für ein Sicherheitselement bekannt, die eine Vielzahl von Mikroelementen mit jeweils einer lateralen Abmessung unter 50 µm aufweist, wobei mindestens ein Geometrieparameter der Mikroelemente zufällig variiert, um den Matteffekt zu erzeugen. Der Geometrieparameter kann die Tiefe der Mikroelemente sein.

Die DE 10 2006 050 047 A1 befasst sich mit einem Durchsichtssicherheitselement mit zumindest einer Mikrostruktur aus einer Anordnung einer Vielzahl von Strukturelementen mit einem charakteristischen Strukturabstand von 1 µm oder mehr, die ein in Durchsicht betrachtungswinkelabhängiges visuelles Erscheinungsbild aufweist.

Der Erfindung liegt die Aufgabe zugrunde, die bekannten Mikrobilder, insbesondere für (vergrößernde) Linsenanordnungen, so zu gestalten, dass die Fälschungssicherheit gesteigert wird, indem ein hoher Detailreichtum für das Mikrobild möglich wird, ohne den Herstellungsaufwand durch aufwendige Druckverfahren etc. zu steigern.

Diese Aufgabe wird mit einem Sicherheitselement der eingangs genannten Art gelöst, bei dem jedes Mikrobild durch eine Mikrokavitätenstruktur gebildet ist, die eine Vielzahl nebeneinanderliegender Mikrokavitäten aufweist, wobei die Mikrokavitäten jeweils in einer zur Oberseite parallel liegenden Raumrichtung eine Ausdehnung von 0,5 µm bis 3 µm aufweisen, die Mikrokavitätenstruktur an ihrer Oberfläche optisch reflektierend oder hoch brechend ist, so dass an der Oberfläche zumindest teilweise Reflexion stattfindet, und für jedes Mikrobild Bildinformation durch eine Modulation des Aspektverhältnisses der Mikrokavitäten gebildet ist.

Die Aufgabe wird weiter gelöst mit einem Herstellungsverfahren der eingangs genannten Art, bei dem jedes Mikrobild durch eine Mikrokavitätenstruktur gebildet wird, die eine Vielzahl nebeneinanderliegender Mikrokavitäten aufweist, wobei die Mikrokavitäten jeweils in einer zur Oberseite parallel liegenden Raumrichtung mit einer Ausdehnung von 0,5 bis 3 µm versehen werden, die Mikrokavitätenstruktur an ihrer Oberfläche optisch reflektierend oder hoch brechend ausgebildet wird, so dass an der Oberfläche zumindest teilweise Reflexion stattfindet, und für jedes Mikrobild Bildinformation durch eine Modulation des Aspektverhältnisses der Mikrokavitäten gebildet wird.

Der Umfang der vorliegenden Erfindung ist in den beigefügten Ansprüchen definiert, insbesondere in den unabhängigen Ansprüchen 1 und 10.

Die Aufgabe wird schließlich auch mit einem Wertdokument gelöst, das ein erfindungsgemäßes Sicherheitselement aufweist.

Erfindungsgemäß wird jedes Mikrobild durch eine Mikrokavitätenstruktur gebildet, die eine Vielzahl nebeneinanderliegender Mikrokavitäten aufweist, die an ihrer Oberfläche optisch reflektierend sind. Die Bildinformation der Mikrobilder wird durch die Form der Mikrokavitäten und insbesondere durch das Aspektverhältnis der Mikrokavitäten kodiert. Das Aspektverhältnis wirkt sich auf die Helligkeit aus, mit der jede Mikrokavität Licht zurückwirft.

Wesentlich für die Erzeugung des Mikrobildes ist es, dass das Sicherheitselement Mikrokavitäten einer ersten und einer zweiten Art bereitstellt, die sich hinsichtlich des Aspektverhältnisses unterscheiden. Das Mikrobild ist mittels dieser Arten von Mikrokavitäten strukturiert. Die Aspektverhältnisse der Mikrokavitäten sind also gemäß einer vorbestimmten Verteilung und damit deterministisch angeordnet, um das Mikrobild zu erzeugen.

Die Mikrobilder können auch ohne vergrößernde Linsenanordnungen eingesetzt werden, da sie einen hohen Detailreichtum bzw. eine hohe Auflösung zeigen.

Die optischen Eigenschaften von Mikrokavitäten, deren Aperturweite im Bereich vieler Mikrometer und mehr liegt und damit Größenordnungen größer ist als die Wellenlänge des einfallenden Lichtes, können durch die Strahlenoptik beschrieben werden. Solche Mikrokavitäten können bei bestimmten Geometrien retroreflektierende Eigenschaften haben. Wenn jedoch die Aperturweite in der Größenordnung der Lichtwellenlänge liegt, dominiert die Lichtbeugung an den Kavitäten, während die Gesetze der geometrischen Optik nur noch als Annäherung gültig sind (vgl. H. Ichikawa, "Numerical analysis of microretroreflectors: transition from reflection to diffraction", J. Opt. A, Pure Appl. Opt. 6, S. 121, 2004). Das Beugungsverhalten von Mikrokavitäten mit Aperturweiten im Mikrometerbereich, wie sie die Erfindung verwendet, ist wissenschaftlich noch nicht vollständig untersucht. Dies trifft insbesondere auf Mikrokavitäten, welche mit einem Multilayer überzogen sind, zu.

Die im Sicherheitselement eingesetzten Mikrokavitäten sind so groß, dass eine Lichtbeugung nicht (mehr) dominiert, andererseits so klein, dass strahlenoptische Reflexion (noch) nicht dominiert. Dieser Zwischenbereich hat sich als vorteilhaft für Herstellbarkeit und Fälschungssicherheit des Sicherheitselementes herausgestellt. Da zudem die Mikrobildgröße, wie oben erläutert, durch die maximal zulässige Linsengröße beschränkt ist, kann ein vorteilhafter Detailreichtum für ein Mikrobild dann erreicht werden, wenn die Mikrokavitäten zumindest in einer Raumrichtung (gesehen parallel zur Oberseite) durch eine Anordnung von Linsen betrachtet nicht aufgelöst werden können. Unterhalb 2-3 µm Abmessung tritt allmählich Beugung des Lichtes an Strukturen in Größenordnungen der Wellenlänge auf, wodurch der Streu- bzw. der Beugungsanteil des reflektierten Lichtes zunimmt. Oberhalb dieser Grenze steigt hingegen der Anteil des spekular reflektierten Lichtes. Dann wird die Profilform der Mikrokavitäten relevanter, was wiederum die Herstellungsanforderungen steigert. Eine laterale Aperturweite einer Mikrokavität nicht über 3 µm bzw. unter 2 µm ist deshalb günstig. Unterhalb 0,5 µm dominiert die Lichtbeugung, was eine einfache Bildgebung erheblich erschweren würde. Somit ergibt sich insgesamt eine laterale Größe der Mikrokavitäten in zumindest einer Raumrichtung zwischen 0,5 µm und 3 µm, besonders bevorzugt größer/ gleich 0,7 µm und/ oder kleiner als 2 µm.

Der gewählte Größenbereich realisiert eine gute optische Wirkung der Mikrokavitäten, die insbesondere anders als retroreflektierende Kavitäten von 10 µm oder mehr Aperturweite gut mit Mikrolinsen kombinierbar sind, bei vergleichbar einfacher Herstellung. Überraschenderweise würden größere Kavitäten den Herstellaufwand steigern, da dann die genaue Profilform relevant würde. Die erfindungsgemäßen Mikrokavitäten sind insbesondere keine Retroreflektoren.

Da zugleich jede Mikrokavität als Bildelement in Form eines Pixels aufgefasst werden kann, führt der gewählte Größenbereich zudem zu einer guten Pixeldichte bei üblichen Mikrobildgrößen.

Durch Variation des Aspektverhältnisses der Mikrokavitäten wird die Intensität, mit der die einzelnen Mikrokavitäten das Licht zurückstreuen, moduliert und so eine Bildstruktur erzeugt. Das Aspektverhältnis ist das Verhältnis von maximaler Tiefe zu minimaler lateraler Ausdehnung und gemäß der gewünschten Bildstruktur im Sicherheitselement variiert. Aufwendige Druckverfahren zur Bereitstellung kleiner und dennoch fein strukturierter Mikrobilder sind deshalb nicht mehr nötig, stattdessen können einfache Replizierverfahren zur Erzeugung von Mikrokavitäten verwendet werden. Die Bildinformation kann bereits durch die entsprechende Verteilung der zwei Arten von Mikrokavitäten in Form eines Schwarz-Weiß-Bildes dargestellt werden, wenn zwei Arten von Aspektverhältnissen verwendet werden. Eine höhere Anzahl von Aspektverhältnissen bzw. eine kontinuierliche Variation des Aspektverhältnisses ist natürlich möglich und führt zu einem Graustufenbild.

Unter Herstellgesichtspunkten ist es bemerkenswert, dass sich die Oberflächenbeschichtung für die Mikrokavitäten lateral nicht ändern muss, um unterschiedliche Helligkeiten zu erzeugen. Sie kann identisch sein, und dennoch wird ein unterschiedlicher Helligkeitseindruck für Mikrokavitäten mit verschiedenem Aspektverhältnis erreicht.

Die Mikrokavitäten zum Bereitstellen der Bildinformation können zusätzlich durch Sub-Wellenlängenstrukturen, beispielsweise in Form von Mottenaugenstrukturen ergänzt werden, welche ein Bildelement oder einen Teil des Motivs des Mikrobildes, insbesondere einen Hintergrund bereitstellen können. Auch die aus DE 102008046128 A1 bekannte Mattstruktur kann hierzu verwendet werden.

In einer anderen bevorzugten Ausgestaltung können die Mikrokavitäten zum Bereitstellen der Bildinformation auch zusätzlich durch Bereiche mit im Wesentlichen glatter bzw. unstrukturierter Oberfläche ergänzt werden, die ein Bildelement oder einen Teil des Motivs des Mikrobildes, insbesondere einen Hintergrund bereitstellen können.

Zur Erhöhung des Detailreichtums ist es zu bevorzugen, Mikrokavitäten, welche im Bereich eines Kontrastwechsels (Hell-Dunkel-Grenze) eines Elementes des Motivs liegen, asymmetrisch dahingehend auszugestalten, dass die auf der dunklen Seite des Motivs liegenden Bereiche der Mikrokavität geometrisch anders gestaltet sind, als die auf der hellen Seite des Abschnittes liegenden Bereiche. Dies ist insbesondere bei der Realisierung von sehr feinen Motiven von Bedeutung, um hier eine Pixelierung durch die Mikrokavitäten zu vermeiden.

Die Mikrokavitäten können in ihrer Öffnung grundsätzlich jede beliebige Form haben, beispielsweise quadratische Aperturen. Es ist aber auch möglich, Mikrokavitäten so zu gestalten, dass deren Kanten den Grenzbereich eines Bildelementes oder Motivs des Mikrobildes bilden. Dadurch können Bildbereiche innerhalb des Mikrobildes scharf gegeneinander abgegrenzt werden, da die Ränder des Bildelementes sehr deutlich sichtbar sind.

Mehrere Mikrobilder werden üblicherweise in einem Muster angeordnet, z.B. passend zu einer darüber liegenden Linsenanordnung. Es ist bevorzugt, dass die Mikrokavitäten sowohl die Motive der Mikrobilder als auch den Motivhintergrund bilden, wobei die Unterschiede durch eine in Folge des zu erzeugenden Mikrobildes klar vorgegebene Variation des Aspektverhältnisses der Mikrokavitäten realisiert werden. In einer einfachen Ausführung können auch nur die Mikrobilder durch die verschiedenen Arten von Mikrokavitäten gebildet sein, während der Motivhintergrund durch Bereiche mit glatter Oberfläche gebildet wird.

Das Sicherheitselement mit den Mikrokavitäten kann auch zur Erzeugung von Mikrobildern für unskaliert darstellende Anordnungen eingesetzt werden, welche auch ohne Ausnutzung eines Moire-Effektes einen schwer nachzubildenden optischen Effekt bewirken. Hierbei handelt es sich um Anordnungen, bei denen mindestens zwei unterschiedliche Bilder mit einer darüber liegenden Linsenanordnung unskaliert, also weder vergrößert noch verkleinert, dargestellt werden. Die Mikrobilder entsprechen in diesem Fall einem unskalierten Ausschnitt des jeweils darzustellenden Bildes. Dies wird nachfolgend als "unskalierte Darstellung" bezeichnet. In einer Ausgestaltung der Erfindung ist es vorgesehen, dass die Mikrokavitäten auf mindestens zwei unterschiedlichen Höhenniveaus innerhalb eines dem jeweiligen Bild zugeordneten Mikrobildes liegen. Die Mikrokavitäten der ersten Art werden dabei in jeweils einer anderen Ebene angeordnet als die Mikrokavitäten der zweiten Art. Auf diese Weise kann beispielsweise ein klar erkennbares Wechselbild, ein Bewegungsbild, ein Pumpbild, ein Morphbild oder ein Stereobild erzeugt werden.

Die Geometrie der Mikrokavitäten ist keinesfalls auf rotationssymmetrische Formen oder Formen, die in Draufsicht, also in ihrer Apertur, einen kreisförmigen Umriss haben, beschränkt. Asphären oder Freiformflächen, wie sie z. B. von Lampenreflektoren bekannt sind, können gleichermaßen verwendet werden. Für die Mikrokavitäten ist weiter eine nicht-rotationssymmetrische Apertur, insbesondere eine rinnenförmige Apertur möglich. Die zwei Arten können sich dann hinsichtlich der Richtung, entlang der sich die nichtrotationssymmetrischen Mikrokavitäten erstrecken, unterscheiden. Insbesondere können auch rinnenförmige Vertiefungen verwendet werden, die beispielsweise die Form eines Halbzylinders haben, welcher nur in einer Richtung gekrümmt, in der anderen jedoch längserstreckt ist.

Ferner können durch nicht-rotationssymmetrische Mikrokavitäten mit unterschiedlicher Orientierung auch Effekte realisiert werden, die einem Betrachter einen dreidimensionalen Objekteindruck vermitteln. Hierzu kann die Höheninformation bzw. die Distanz des wiederzugebenden Objektes zum Betrachter durch den Orientierungswinkel solcher Mikrokavitäten kodiert werden. In diesem Fall nimmt ein Betrachter eine lateral unterschiedliche Parallaxe in der ebenen, mit Mikrokavitäten strukturierten Oberfläche wahr. Der räumliche Eindruck kann verstärkt werden, indem bei der Herstellung der Mikrokavitäten zusätzlich die Strukturtiefe der Mikrokavitäten als Funktion der Höhe bzw. der Reflexionseigenschaften des Objektes variiert wird. Ein räumlicher Eindruck lässt sich ebenfalls erzielen, wenn das Intensitätsprofil des Motivs pixelweise in solche Mikrokavitäten mit kodiertem Orientierungswinkel umgesetzt wird.

Schließlich ist auch der Querschnitt der rinnenförmigen Mikrokavitäten nicht auf symmetrische Geometrien beschränkt. Asymmetrische Geometrien können durch einen "Blaze"-Effekt eine Lichtbündelung in die Richtung eines Betrachters erzeugen. Dadurch kann die vom Betrachter wahrgenommene Lichtausbeute erhöht werden.

Die Mikrokavitäten können optional zur Erzeugung eines Farbeindruckes mit einer Dünnfilmbeschichtung beschichtet werden. Wenn dabei eine sogenannte Colour-Fix-Beschichtung, welche die Farbe beim Kippen des Sicherheitselementes, also Variation des Betrachtungswinkels, nicht ändert, gewählt wird, erhält man einen ausgeprägten Hell/Dunkel-Kontrast in den Bereichen von Mikrokavitäten mit unterschiedlichem Aspektverhältnis. Dabei zeigen die mit flacheren Mikrokavitäten gefüllten Bereiche, welche mit einer Colour-Fix-Beschichtung überzogen sind, einen kräftigen gesättigten Farbton, während die Bereiche der tiefen Mikrokavitäten ausgeprägt dunkel erscheinen. Als Beschichtung eignet sich die Schichtfolge 10 nm Cr, 210 nm ZnS mit 60 nm Al als darunter liegende Spiegelschicht. Es kann aber auch ein halbtransparenter Schichtaufbau, z.B. 15 nm Alu, 75 nm ZnS und 15 nm Alu gewählt werden.

Verwendet man eine sogenannte Colour-Shift-Beschichtung bzw. einen Interferenzschichtaufbau, die/der einen vom Betrachtungswinkel abhängigen Farbeindruck (Colour-Shift) bewirkt, hängt auch der Farbeindruck vom Aspektverhältnis ab. Werden derartige Interferenzschichtaufbauten, die auf glatten Oberflächen einen Farbwechsel beim Kippen zeigen, auf Mikrokavitäten aufgebracht, erscheinen flache Mikrokavitäten in etwa demselben Farbton wie das senkrecht reflektierte Licht der glatten Oberfläche. Tiefe Mikrokavitäten (Aspektverhältnis > 0,4) nehmen dagegen in etwa den Farbton einer glatten Oberfläche im gekippten Zustand an. Bei derart beschichteten Mikrokavitäten kann daher durch die Wahl des Aspektsverhältnisses nicht nur die Helligkeit, sondern auch der Farbton variiert werden.

Der Farbeffekt unterscheidet die Mikrokavitäten nach deren Geometrievariation. Es ist deshalb nicht nötig, die den Farbeffekt bewirkende Beschichtung zu strukturieren. Sie ist bevorzugt flächig über der Mikrokavitätenstruktur aufgebracht. Für ein Schwarz-Weiß-Bild oder ein Graustufenbild sind bevorzugt die Mikrokavitäten frei von einer Beschichtung, die zum Erzeugen eines Farbeffektes eine vom Einfallswinkel abhängige Dispersion hat.

Für das erfindungsgemäße Herstellungsverfahren kommen insbesondere Direktbelichtungstechniken, z. B. mit Hilfe eines Laserwriters in Frage. Die Herstellung kann analog zu den bekannten Herstellungsverfahren für Mikrolinsen erfolgen. Das Original der Mikrokavitätenstruktur wird über Direktbelichtung mit Hilfe eines Laserwriters in ein mit Photolack beschichtetes Substrat geschrieben und anschließend der belichtete Anteil des Photolacks entfernt. Ein belichtetes Original kann anschließend galvanisch abgeformt und somit ein Prägestempel erzeugt werden. Letztendlich wird die Struktur über einen Prägeprozess beispielsweise in UV-Lack auf Folie oder direkt (z.B. per Heißprägen in die Oberfläche der Folie) repliziert. Alternativ kann ein Nanoimprint-Verfahren eingesetzt werden. Aufwendigere Verfahren zur Originalherstellung wie Elektronenstrahl- oder "Focussed Ion Beam"-Belichtungsverfahren erlauben eine noch feinere Ausgestaltung der Geometrie der Mikrokavitäten. Diese Herstellungsverfahren bieten viele Gestaltungsmöglichkeiten in der Wahl der Geometrie der Mikrokavitäten. So können ohne Mehraufwand auch nicht-rotationssymmetrische bzw. nichtsphärische Geometrien von Mikrokavitäten mit höherer Genauigkeit als mit dem oben genannten Laser-Direktbelichtungsverfahren realisiert werden.

Anschließend erfolgt eine Beschichtung der Oberfläche, z. B. mit einer Reflexionsschicht und/ oder einer einen Farbeffekt bewirkenden Struktur, z. B. einem Interferenzschichtaufbau, und/oder einer Farbschicht, z. B. einer Colour-Fix-Beschichtung. Hierzu kommen unter anderem Elektronenstrahlbedampfen, Sputtern oder thermisches Verdampfen unter Vakuum in Frage. Die Beschichtung kann entfallen, wenn die Oberfläche bereits von Haus aus reflektierend ist. Zum Abschluss wird die Struktur zum Schutz vorzugsweise mit einer Deckschicht kaschiert.

Bei konstanter Aperturweite können Mikrokavitäten mit unterschiedlichen Aspektverhältnissen auch allein durch eine Variation der Tiefe der Mikrokavitäten, beispielsweise über eine entsprechende Variation der Belichtungsintensität eines Laserwriters, erzeugt werden. Eine solche Vorgehensweise bietet den Vorteil einer wesentlich einfacheren Datenaufbereitung.

Das Sicherheitselement kann insbesondere als Sicherheitsfaden, Aufreißfaden, Sicherheitsband, Sicherheitsstreifen, Patch, Folienelement oder als Etikett ausgebildet sein. Insbesondere kann das Sicherheitselement transparente Bereiche oder Ausnehmungen überspannen und/oder für eine Sicherheitskarte oder ein Ausweisdokument (z.B. Reisepass) eingesetzt werden.

Das Sicherheitselement kann insbesondere Teil einer noch nicht umlauffähige Vorstufe zu einem Wertdokument sein, das neben dem erfindungsgemäßen Sicherheitselement beispielsweise auch weitere Echtheitsmerkmale (wie z. B. im Volumen vorgesehene Lumineszenzstoffe) aufweisen kann. Unter Wertdokumenten werden hier einerseits das Sicherheitselement aufweisende Dokumente verstanden. Andererseits können Wertdokumente auch sonstige Dokumente und Gegenstände sein, die mit dem erfindungsgemäßen Sicherheitselement versehen werden können, damit die Wertdokumente nicht kopierbare Echtheitsmerkmale aufweisen, wodurch eine Echtheitsüberprüfung möglich ist und zugleich unerwünschte Kopien verhindert werden. Chip-oder Sicherheitskarten, wie z. B. Bank- oder Kreditkarten, sind weitere Beispiele für ein Wertdokument.

Das erfindungsgemäße Herstellungsverfahren kann so ausgebildet werden, dass die beschriebenen bevorzugten Ausbildungen und Ausführungsformen des Sicherheitselementes hergestellt werden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen. Insbesondere kann auf das Merkmal der Perforation in allen bislang allgemein und nachfolgend noch im Detail erläuterten Ausführungsformen verzichtet werden.

Nachfolgend wird die Erfindung beispielshalber anhand der beigefügten Zeichnungen, die auch erfindungswesentliche Merkmale offenbaren, noch näher erläutert ist. Es zeigen:
- Fig. 1: eine schematische Darstellung eines Teils eines Sicherheitselementes, nämlich eine Mikrokavitätenstruktur und eine darüber angeordnete Linse,
- Fig. 2 bis 6: schematische Darstellungen verschiedener Geometrien, welche für die Mikrokavitätenstruktur der Fig. 1 möglich sind,
- Fig. 7 und 8: Draufsichten auf ein Mikrobild, wie es in der Ausführungsform gemäß Fig. 1 erzeugt werden kann,
- Fig. 9: eine weitere Draufsicht einer abgewandelten Bauweise,
- Fig. 10 und 11: zwei verschiedene Ausführungsformen von Mustern mit Mikrobildern,
- Fig. 12: eine Darstellung ähnlich der Fig. 1 für eine Mikrokavitätenstruktur, die um Sub-Wellenlängenstrukturen zur Erzeugung eines schwarzen Hintergrundes ergänzt ist,
- Fig. 13 und 14: rasterelektronische Aufnahmen eines Mikrobildes, das den Aufbau der Fig. 12 aufweist,
- Fig. 15: eine Draufsicht ähnlich der Fig. 7 auf eine abwandelte Bauweise, und
- Fig. 16: eine schematische Darstellung ähnlich der Fig. 1.

In den Figuren wird nachfolgend ein Sicherheitselement 10 beschrieben, welches Mikrobilder bereitstellt, denen jeweils eine darüber liegende Linse (zur Vergrößerung der) Mikrobilder zugeordnet ist. Es kann sich bei dieser Anordnung um eine bekannte Moire-Vergrößerungsanordnung handeln, wie sie im Stand der Technik für Sicherheitselemente von Wertdokumenten, beispielsweise von Banknoten, bekannt ist. Die Kombination der Mikrobilder mit vergrößernden Linsenanordnungen ist jedoch optional, und die Mikrobilder, wie sie mit dem hier noch beschriebenen Aufbau erzeugt werden, können auch mit einer Linsenanordnung zur unskalierten Darstellung im Sicherheitselement 10 verwendet werden.

Den hier beschriebenen Sicherheitselementen ist gemein, dass das Mikrobild durch eine Mikrokavitätenstruktur bereitgestellt wird. Die einzelnen Mikrokavitäten sind so bemessen, insbesondere hinsichtlich ihrer minimalen Aperturweite, dass weder Lichtbeugung noch spekulare Reflexion die beherrschenden Mechanismen beim Zurückwerfen der einfallenden Strahlung sind, sondern eine Rückstreuung. Die Bildinformation wird nicht durch ein Druckbild mit unterschiedlichen Druckfarben erzeugt, sondern durch die Mikrokavitäten, welche sich hinsichtlich ihres Aspektverhältnisses unterscheiden. Abhängig davon werfen die einzelnen Mikrokavitäten die einfallende Strahlung mit unterschiedlicher Intensität zurück, so dass die Information jedes Mikrobildes durch das Aspektverhältnis der Mikrokavitäten kodiert ist.

Durch das Aspektverhältnis der Mikrokavitäten wird die Lichtrückstreuung eingestellt. Die Helligkeit bei der Strahlungsrückstreuung wird also nicht alleine durch die Apertur der Mikrokavität eingestellt. Das Aspektverhältnis ist dabei das Verhältnis aus minimaler Aperturweite zu maximaler Tiefe einer Mikrokavität.

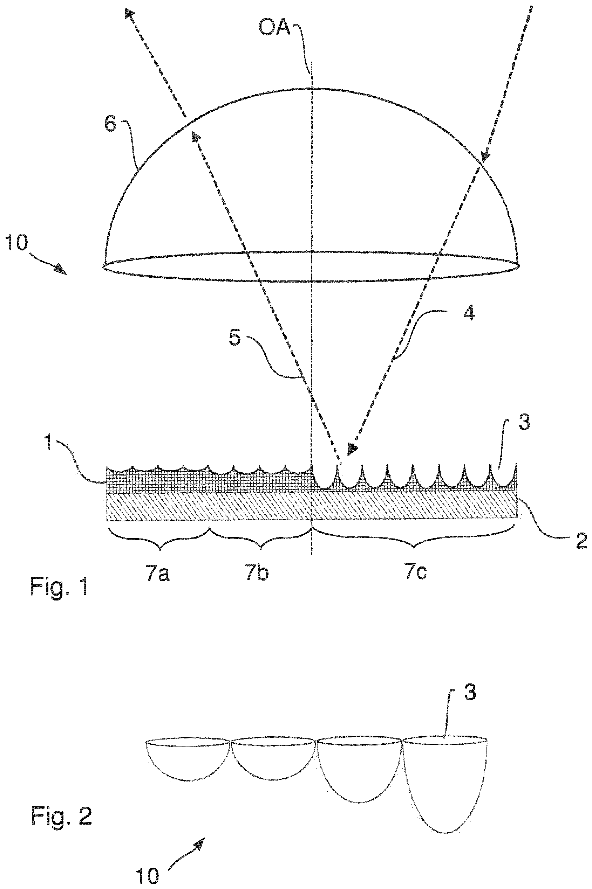

Figur 1 zeigt schematisch eine Schnittdarstellung durch eine reflektierende Mikrokavitätenstruktur 1, die in einem Substrat 2 gebildet ist. Auf seiner Oberseite weist dieses Substrat 2 mehrere konkave Mikrokavitäten 3 auf, die im gezeigten Fall als sphärische Vertiefungen ausgebildet sind. Die Vertiefungen haben eine reflektierende Oberfläche, beispielsweise durch eine geeignete Beschichtung. Die Mikrokavitäten 3 wirken rückstreuend für einfallendes Licht.

Über der Mikrokavitätenstruktur 1 ist eine Linse 6 angeordnet, welche ein Mikrobild 9 (vergrößert) abbildet, das durch die Mikrokavitätenstruktur 1 gebildet ist. Ein Teil der einfallenden Strahlung 4 wird dabei an den Mikrokavitäten 3 der Mikrokavitätenstruktur 1 in den dargestellten Raumwinkel gestreut (Strahlung 5) und durch die Linse 6 in die Richtung des Betrachters gelenkt. Im Fall einer Moire-Vergrößerungsanordnung nimmt ein Betrachter durch das Zusammenwirken einer Vielzahl von periodisch angeordneten Mikrobildern 9 und Linsen 6 ein vergrößertes Bild wahr. Im Fall einer hier nicht gezeigten unskaliert darstellenden Anordnung zur Erzeugung beispielsweise eines Wechselbilds sieht ein Betrachter bei Betrachtung aus zwei oder mehr unterschiedlichen Betrachtungsrichtungen unterschiedliche Bilder, die dadurch bewirkt sind, dass die Linsen aus den unterschiedlichen Betrachtungsrichtungen verschiedene Mikrobilder abbilden, die unterschiedlichen Bildern zugeordnet sind.

Das Mikrobild 9 wird durch die Mikrokavitätenstruktur 1 erzeugt, welche die nebeneinander liegenden Mikrokavitäten 3 umfasst, die nicht alle dasselbe Aspektverhältnis haben. In der schematischen Darstellung der Figur 1 erkennt man drei Bereiche 7a, 7b und 7c, in denen die in Figur 1 in ihrer Apertur identischen Mikrokavitäten unterschiedlich tief ausgebildet sind. Durch die unterschiedliche Tiefe ändert sich die Helligkeit der zurückgeworfenen Strahlung 5, so dass die drei Bereiche 7a-c unterschiedlich hell erscheinen. Diese Geometrievariation moduliert Bildinhalte des Mikrobildes 9.

Die Figuren 2 bis 6 zeigen Beispiele verschiedener möglicher Mikrokavitäten 3. In Figur 2 ist exemplarisch eine Mikrokavitätenstruktur 1 dargestellt, die zur Veranschaulichung vier Mikrokavitäten 3 hat. Deren Oberfläche ist jeweils durch die Geometrie eines Kegelschnittes gebildet. Die Aperturen, d. h. die Draufsichten längs der optischen Achse OA der Figur 1, sind in zwei lateralen Raumrichtungen, d. h. quer zur optischen Achse OA gleich. Die Tiefe und damit das Aspektverhältnis der Mikrokavitäten 3 variiert jedoch lateral. Da die Lichtrückstreuung stark vom Aspektverhältnis abhängt, erscheint die ganz rechte Mikrokavität der Mikrokavitätenstruktur der Figur 2 dunkler als die ihr links benachbarte usw. Je geringer das Aspektverhältnis (laterale Ausdehnung/Tiefe), d. h. je flacher die Mikrokavität, desto heller ist die Mikrokavität 3.

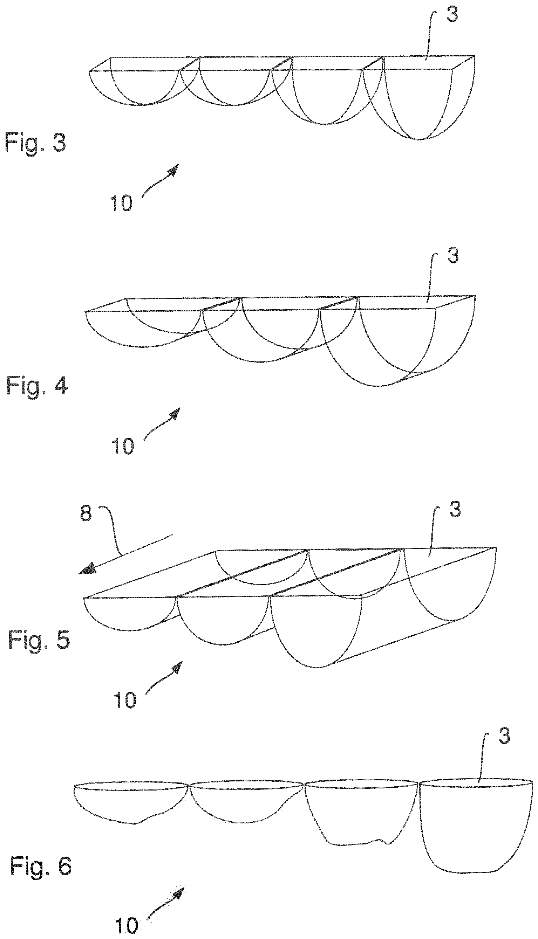

Die Aperturen der Mikrokavitäten 3 sind natürlich nicht auf rotationssymmetrische und natürlich auch nicht auf für alle Mikrokavitäten einheitliche Formen beschränkt. Figur 3 zeigt eine quadratische Apertur für die Mikrokavitäten 3, die in Schnittebenen, welche zueinander senkrecht stehen und sich in der optischen Achse schneiden, jeweils das gleiche Tiefenprofil zeigen.

Es sind auch Vertiefungen möglich, welche nur in einer Richtung gekrümmt sind und der anderen Richtung ungekrümmt sind. Figur 4 zeigt eine solche Mikrokavitätenstruktur 1.

Den Mikrokavitätenstrukturen 1 der Figuren 2 bis 4 ist gemein, dass ihre Aperturen, exemplarisch als Quadrat oder Kreis, keine Aperturweite haben, die wesentlich größer als 3 µm ist. Für die Erzeugung des Mikrobildes 9 genügt es jedoch, wenn diese Begrenzung nur in einer Richtung parallel zur Oberfläche eingehalten wird. Entsprechende nicht-rotationssymmetrische, rinnenförmige Mikrokavitäten 3 zeigt die Figur 5. Die Mikrokavitäten 3 der dort dargestellten Mikrokavitätenstruktur 1 erstrecken sich längs einer Richtung 8, ggf. auch über deutlich mehr als 3 µm.

Die insgesamt konkave Wölbung der Mikrokavitäten 3 ist nicht auf Halbellipsen oder Halbkreise beschränkt. Es können asphärische Wölbungen oder auch asymmetrische Formen Verwendung finden, wie beispielsweise die Figur 6 zeigt. Hier haben die Mikrokavitäten 6, obschon insgesamt immer noch konkav, irregulär gewölbte Oberflächen und zum Teil auch konvexe Abschnitte.

Der optische Effekt der Lichtstreuung an Mikrokavitäten 3 solcher Mikrokavitätenstrukturen 1 hängt kaum von der detaillierten Oberflächenkrümmung ab, da die minimalen Aperturweiten zwischen 0,5 µm und 3 µm liegen. Daher gelten bei der Wechselwirkung mit dem einfallenden Licht nicht mehr zwingend und allein die Gesetze der geometrischen Optik, sondern es findet auch eine Wechselwirkung von elektromagnetischen Wellen statt. Modifikationen in der Wölbung von Mikrokavitäten im Wellenlängen- oder Sub-Wellenlängenbereich haben daher keine signifikante Auswirkung auf das Streuverhalten solcher Mikrokavitäten 3. Dies hat den Vorteil, dass bei der Herstellung der Mikrokavitätenstruktur 1 die Mikrokavitäten 3, welche unterschiedliche Reflexionen zeigen sollen, im Wesentlichen nur in einem Parameter, nämlich im Aspektverhältnis (minimale laterale Ausdehnung zu maximaler Tiefe) variiert werden müssen. Dies erleichtert die Herstellung erheblich, da keine gesteigerten Präzisionsanforderungen an die Profilform gestellt werden.

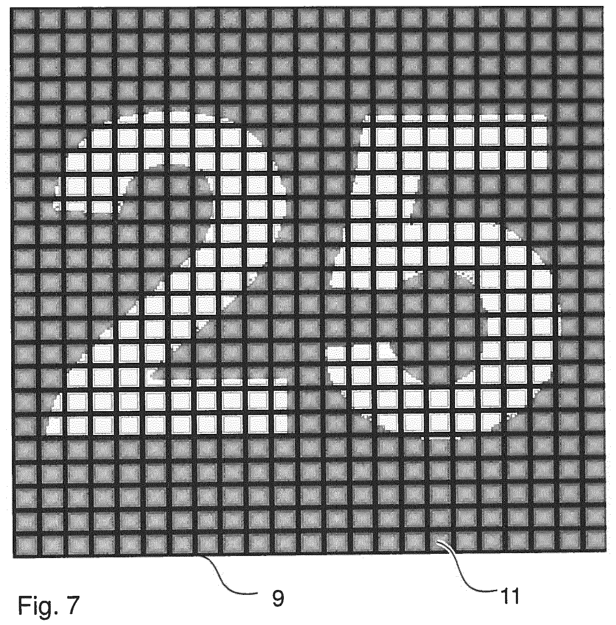

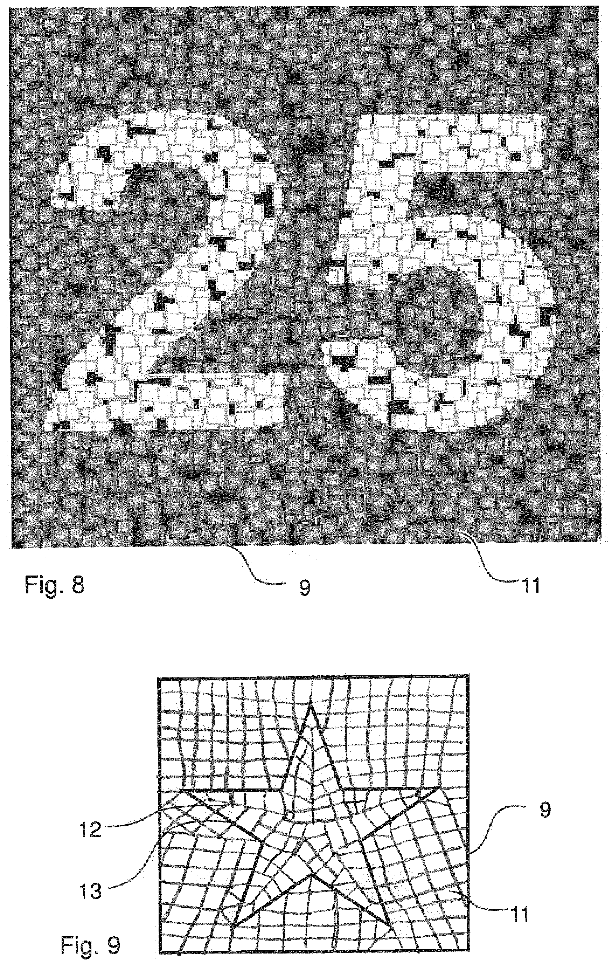

Figur 7 zeigt ein Mikrobild 9 der Größe von 23 x 23 µm² mit einem Zahlenmotiv "25". Es ist durch Mikrokavitäten 3 der Größe 1 x 1 µm² gebildet. Jede Mikrokavität 3 ist ein Pixel 11. Die Mikrokavitäten 3 sind entweder periodisch in einem festen Muster (Figur 7), das nicht zwingend ein kartesisches Raster sein muss, oder aperiodisch bzw. quasi-statistisch (Figur 8) angeordnet. Die in den Figuren 7 und 8 dargestellten Grauwerte geben dabei das Aspektverhältnis der einzelnen Mikrokavitäten 3 wieder. Die Mikrokavitäten 3 innerhalb des Zahlenmotivs sind um etwa 40 % tiefer als die Mikrokavitäten 3 des Hintergrundes. Ist eine komplementäre Farberscheinung des Mikrobildes gewünscht, können die Tiefenverhältnisse der Mikrokavitäten 3 auch umgekehrt vorgesehen sein. Die Mikrokavitäten 3 innerhalb des Hintergrunds sind in diesem Fall tiefer als die Mikrokavitäten des Zahlenmotivs.

Mikrokavitäten 3, welche im Grenzbereich des Motivs liegen, sind bevorzugt auf der Seite des Motivs tiefer als auf der Seite des Hintergrundes. Dies hat den Vorteil, dass trotz der relativ großen Pixelierung bzw. der geringen Pixelanzahl durch die Kavitäten 3 noch relativ feine Muster nachgebildet werden können.

Die Gestaltung eines Motivs im Mikrobild 9 ist nicht auf Kavitäten mit quadratischen oder symmetrischen Aperturen beschränkt, wie Figur 9 zeigt. Hier ist ein Mikrobild 9 zu sehen, das einen Stern als Motiv 12 aufweist. Die Kanten der Aperturen der Pixel 11, d. h. der Mikrokavitäten 3 sind so ausgebildet, dass sie mit dem Rand 13 des Motivs 12 zusammenfallen. Dies bewirkt, dass diese Kanten sehr deutlich durch das am Grenzbereich gestreute Bild nachgebildet werden und der Rand 13 des Motivs 12 besonders gut und scharf erkennbar ist.

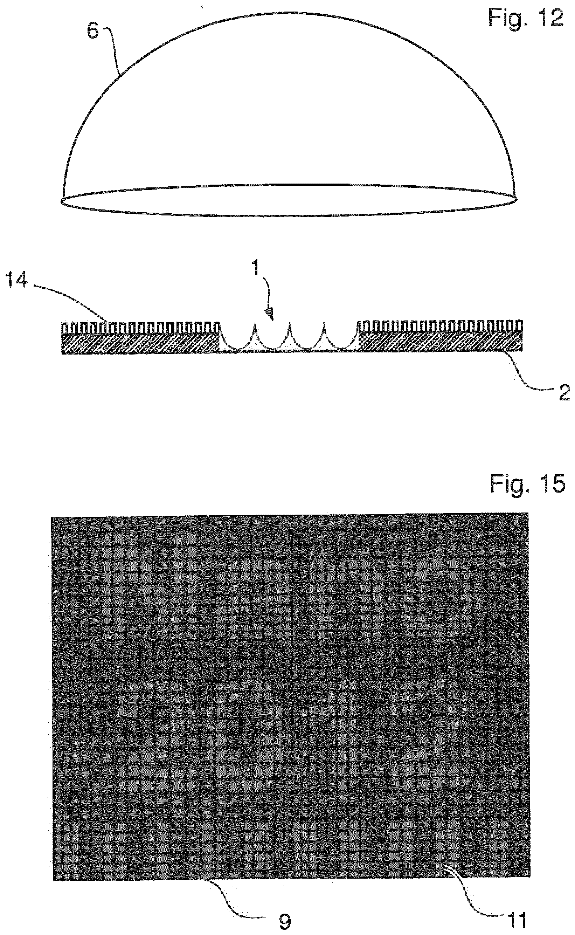

Die Gestaltung eines Motivs durch ein Mikrobild ist nicht auf die Wahl zwischen periodischem Muster und aperiodischem Muster für die Mikrokavitätenstruktur eingeschränkt. So ist es möglich, den Abstand der Zentren der Mikrokavitäten, also die Weite der Aperturen, gemäß vorgegebenen Funktionen kontinuierlich entlang zumindest einer Richtung zu verändern. Diese Ausgestaltung zeigt exemplarisch die Figur 15, bei der ebenfalls ein Mikrobild 9 mit einem Motiv zu sehen ist. In Abwandlung zur Ausführungsform der Figur 7 ist die Apertur, d.h. die Weite der Mikrokavitäten in einer Richtung (rein exemplarisch in der Horizontalen) variiert. Selbstverständlich ist auch eine zweidimensionale Variation möglich. Hintergrund für diese Ausführungsform ist es, dass eine streng periodische Anordnung von Mikrokavitäten als optisches Gitter wirken und einfallendes Licht in einzelne Beugungsordnungen beugen kann. Ein Betrachter empfindet deshalb bei einem schrägen Betrachtungswinkel die Oberfläche als Folge der spektralen Aufspaltung in den höheren Beugungsordnungen bunt. Die Beugung wird durch die Variation des Abstandes der Zentren der Mikrokavitäten, d.h. der Aperturen der Mikrokavitäten vermieden. Das Motiv der Figur 15 hat deshalb unterschiedlich tiefe Mikrokavitäten mit einer rechteckigen Apertur, und die Aperturweite, d.h. der Abstand zwischen den Zentren benachbarter Mikrokavitäten ändert sich kontinuierlich in der Horizontalen. Er beträgt exemplarisch zwischen 1 und 2 µm. Schon mit einer eindimensionalen Variation, aber besonders wirksam mit einer zweidimensionalen Variation kann man die spektrale Aufspaltung mindern oder gar ganz unterdrücken. Kombiniert man eine solche Mikrokavitätenstruktur, d.h. ein solches Mikrobild 9, mit Linsen 6 zur Realisierung einer Moire-Vergrößerungsanordnung, erscheint das vergrößerte Bild gleichmäßiger als bei einer Variante mit strikt periodisch angeordneten Mikrokavitäten. Die Variation des Abstandes muss selbstverständlich nicht kontinuierlich oder linear (wie in Figur 15) sein; es genügt, wenn die Regelmäßigkeit der Mikrokavitätenstruktur gestört ist.

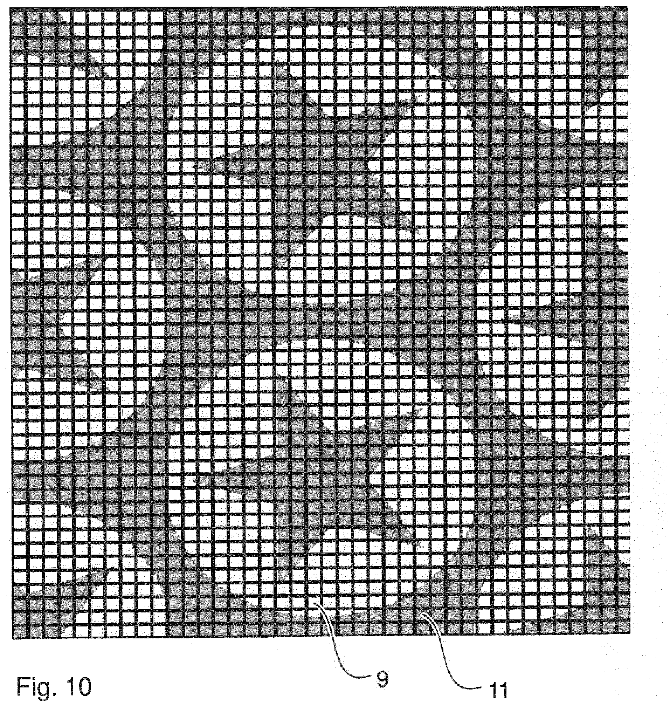

Für die exemplarisch geschilderte Moiré-Vergrößerungsanordnung werden die Mikrobilder 9 passend zum Muster der Linsen 6 in einem Raster nebeneinander angeordnet. Figur 10 zeigt einen Ausschnitt aus einer Vielzahl von Mikrobildern 9, welche hier in einem Hexagonalraster angeordnet sind. Die Pixel 11 bilden dabei sowohl die Mikrobilder 9 als auch den zwischen den Mikrobildern 9 liegenden Hintergrund.

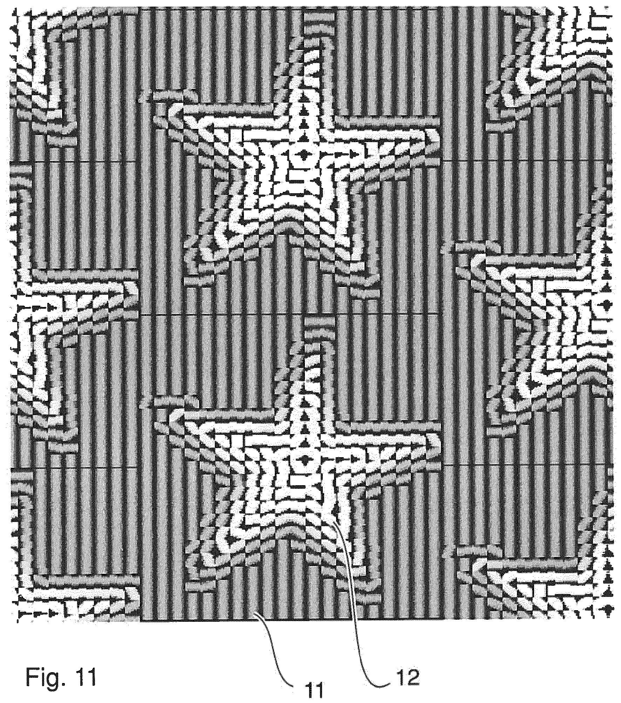

Eine solche Realisierung einer Anordnung von Mikrobildern 9 ist nicht auf Pixel 11 bzw. Mikrokavitäten 3 mit rechteckiger Apertur eingeschränkt, wie bereits erläutert. Figur 11 zeigt die Verwendung von rinnenförmigen Mikrokavitäten 3, wie sie schematisch in Figur 5 dargestellt sind. Jedoch ist zusätzlich gegenüber der schematischen Darstellung der Figur 5 nun auch noch die Richtung 8 einzelner Mikrokavitäten 3 sowie die Länge der Rinnen zur Strukturierung des Mikrobildes 9 variiert. Dadurch kann dem Betrachter, wie bereits im allgemeinen Teil der Beschreibung erläutert, ein räumlicher Eindruck des Motivs 12 vermittelt werden.

Die erwähnten Mikrokavitätenstrukturen 1 zeigen eine optische Wirkung durch Rückstreuung. Vorzugsweise ist wird diese erhöht, indem die Oberfläche der Mikrokavitätenstruktur 1 mit einer metallischen oder hochbrechenden Schicht belegt ist, so dass zumindest eine Teilreflexion an der Oberfläche der Mikrokavitätenstruktur 1 und damit der Mikrokavitäten 3 stattfindet. Die Schicht wird bevorzugt aufgedampft. Für Bedampfungsverfahren kommen die gängigen Materialien, wie Aluminium, Silber, Gold, Kupfer, Zink, Chrom und Legierungen davon infrage. Hochbrechende Schichten können durch Zinksulfid, Titandioxid oder Silizium erzeugt werden. Derartige Beschichtungen liefern einen besonders guten Hell-/ Dunkel-Kontrast der Mikrokavitäten 3 unterschiedlichen Aspektverhältnisses. Wie im allgemeinen Teil der Beschreibung bereits erläutert, können die Beschichtungen auch als bereits für ebene Flächen bekannte Colour-Fix-Beschichtung oder Colour-Shift-Beschichtung ausgeführt werden.

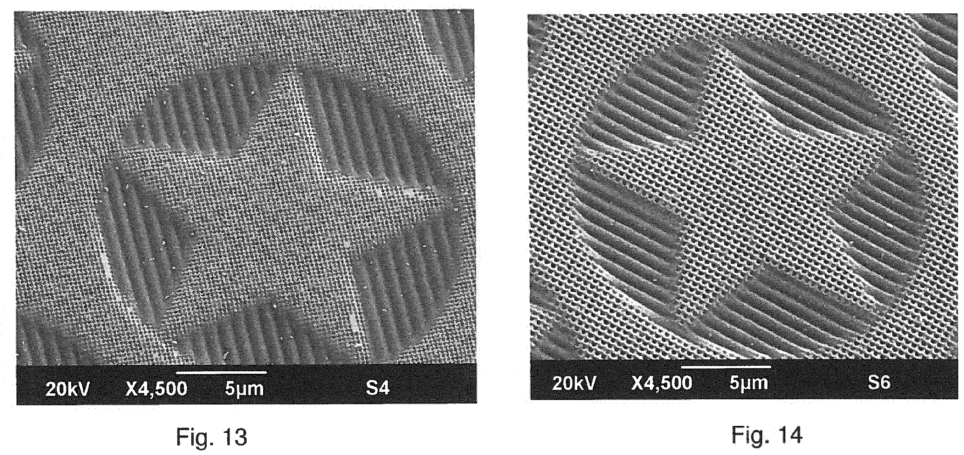

Figur 12 zeigt eine weitere Möglichkeit, den Hell-/Dunkel-Kontrast zu steigern, indem zusätzlich zur Mikrokavitätenstruktur 1 noch eine Sub-Wellenlängenstruktur 14 auf dem Substrat 2 ausgebildet ist. Die Figuren 13 und 14 zeigen mögliche Strukturen in Form von REM-Aufnahmen eines Mikrobildes 9, das als Motiv 12 einen Stern aufweist. Der Stern und der die Sternspitzen umgebende ringförmige Bereich ist durch eine Sub-Wellenlängenstruktur mit einer Periode von 240 nm (Figur 13) bzw. 400 nm (Figur 14) ausgebildet. Die Oberfläche des dazwischen liegenden Bereiches enthält Mikrokavitäten 3 in einer Mikrokavitätenstruktur 1, die (wenn auch nicht dargestellt) die Bildinformation durch das Aspekt-Verhältnis moduliert.

In einer hier nicht gezeigten einfachen Ausgestaltung enthält die Oberfläche des Substrats 2 zusätzlich zur Mikrokavitätenstruktur 1 noch einen glatten bzw. unstrukturierten Bereich. Ein solcher Bereich bildet beispielsweise einen reflektierenden Hintergrund, während die Mikrobilder 9 durch Mikrokavitäten 3 in einer Mikrokavitätenstruktur 1 gebildet werden, die die Bildinformation durch das Aspekt-Verhältnis moduliert.

Die Herstellung der Mikrokavitätenstrukturen 1 erfolgt bevorzugt wie im allgemeinen Teil der Beschreibung erläutert durch Laserdirektbelichtung in einem photolithografischen Verfahren. Mikrokavitäten 3 mit Abmessungen bis zu einem minimalen Durchmesser von 0,5 µm können mithilfe eines Laserwriters direkt in Photolack geschrieben werden. Aufgrund der nicht linearen Empfindlichkeit gängiger Photolacke können bei geeigneter Wahl der Belichtungsintensität Strukturen erzeugt werden, die deutlich feiner als der Strahldurchmesser des Lasers sind. Hierbei können auch Strukturen mit Aspektverhältnissen größer als 1 (Tiefe größer als Breite) erzeugt werden. Die Tiefe kann sehr einfach durch die Wahl der Belichtungsintensität variiert werden. Die Herstellung von Mikrokavitäten mit hoher Genauigkeit können optional auch Elektronenstrahl- bzw. "Focussed Ion Beam"-Belichtungs-verfahren infrage kommen. Ein belichtetes Original kann nach dem Entwickeln des Photolacks anschließend galvanisch abgeformt und über einen Prägeprozess in UV-Lack auf Folie oder direkt in die Oberfläche der Folie repliziert werden. Alternativ können auch Nanoimprint-Verfahren eingesetzt werden. In einem letzten Schritt erfolgt die Beschichtung der reflektierenden Oberfläche, z.B. durch Bedampfen. Metallisierte Oberflächen bzw. Interferenzschichtsysteme können durch Elektronenstrahlbedampfung, Sputtern oder durch thermisches Bedampfen unter Vakuum aufgebracht werden. Anschließend wird die bedampfte Seite zum Schutz mit einer Deckschicht kaschiert.

Bei der Bedampfung des Sicherheitselementes 10 mit Moire-Vergrößerungsanordnung oder unskaliert darstellender Anordnung wird die Prägung der Mikrokavitäten 3 bevorzugt auf der gegenüberliegenden Seite der Folie durchgeführt, auf welcher die Linsen 6 aufgebracht sind.

Die verwendeten Beschichtungen liefern einen Hell-/Dunkel-Kontrast der Mikrokavitäten 3 in unterschiedlicher Tiefe bzw. unterschiedlichem Aspekt-verhältnis.

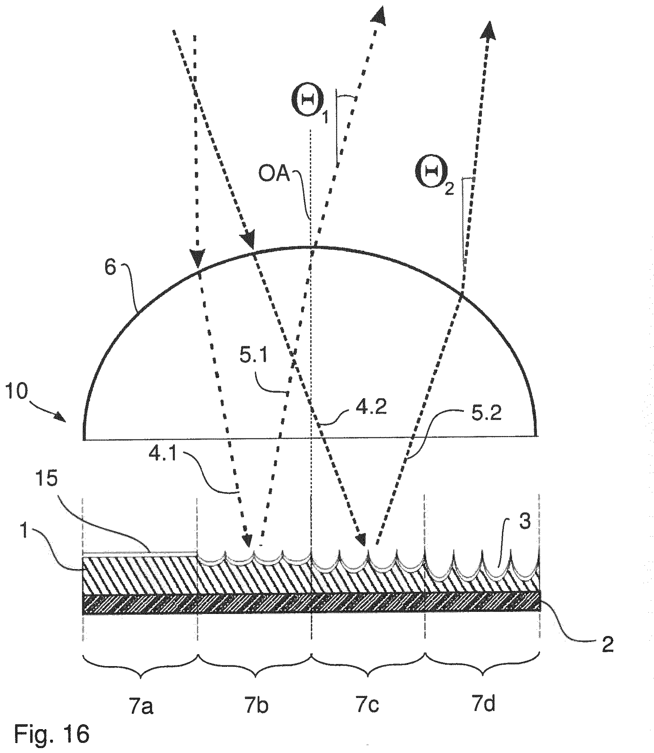

Fig. 16 zeigt ähnlich Fig. 1 schematisch eine Schnittdarstellung durch eine reflektierende Mikrokavitätenstruktur 1. Elemente, die strukturell oder funktionell denen der Fig. 1 entsprechen, sind mit denselben Bezugszeichen versehen, und für die Beschreibung dieser Elemente wird auf die vorhergehende Figurenbeschreibung verwiesen. Die Mikrokavitätenstruktur 1 hat drei Bereiche 7b bis 7d, in denen Mikrokavitäten 3 unterschiedlicher Tiefe ausgebildet sind. Im Bereich 7a ist keine Mikrokavitätenstruktur gebildet; die Oberfläche ist hier glatt. Die Mikrokavitäten 3 sind mit einer Beschichtung 15 versehen, die hier exemplarisch als Colour-Shift-Beschichtung ausgebildet ist. Sie umfasst also eine metallische Spiegelschicht, eine dielektrische Abstandsschicht und eine halbtransparente Metallschicht, wie dies im Stand der Technik für solche Beschichtungen bekannt ist. Diese einen Farbeffekt zeigende Beschichtung kann auch entfallen.

Exemplarisch sind in Fig. 16 zur Verdeutlichung zwei unterschiedliche Lichtpfade eingezeichnet. Ein erster Lichtpfad mit Strahlung 4.1 tritt unter einem Winkel θ₁ bezogen auf die Richtung der optischen Achse OA aus, ein zweiter Lichtpfad unter dem Winkel θ₂. Wenn sich ein Betrachter nun an einer Position befindet, in der er eine Betrachtungsrichtung hat, die zum Verlauf der Strahlung gemäß einfallender Strahlung 4.1 und ausfallender Strahlung 5.1, also entsprechend dem Winkel θ₁, führt, nimmt er die Bildinformation des Bereiches 7b war. Verkippt er die Struktur bzw. ändert er seinen Betrachtungswinkel um die Winkeldifferenz θ₁ - θ₂, sieht er die Bildinformation des Bereiches 7c, da die Strahlung gemäß 4.2 und 5.2 verläuft.

Die schematische Darstellung gemäß Fig. 16 verdeutlicht, dass mit dem Sicherheitselement ein Kipp-Effekt realisiert ist, sobald in der Fläche unter einer Mikrolinse 6 Mikrokavitäten 3 unterschiedlicher Arten, d.h. unterschiedlichen Aspektverhältnisses, vorhanden sind, die sich in ihrem Reflexionsverhalten unterscheiden. Die Verwendung einer Interferenzschicht auf den Mikrokavitäten ist ein hierfür mögliches Mittel, da der Farbeffekt, den die Interferenzschichten haben, mit dem Aspektverhältnis der Mikrokavitäten 3 variiert. Die Mikrokavitäten 3 der Bereiche 7b bis 7d haben somit für einen Betrachter einen anderen Farbeffekt. Der erwähnte Wechsel des Betrachtungswinkels führt damit zu einem Farbwechsel. Der Kipp-Effekt ist im Ergebnis ein Farbeffekt. Analog ist ein Graustufeneffekt möglich, wenn sich die Mikrokavitäten 3 aufgrund ihrer verschiedenen Aspektverhältnisse in der Reflexion unterscheiden.

Für die geschilderten Farbeffekte bzw. farbige Mikrobilder 9 eignen sich Beschichtungen, welche eine winkelabhängige Dispersion besitzen, wie bereits ausgeführt. Solche Interferenzschichtaufbauten bestehen üblicherweise aus mindestens drei Schichten: einer halbtransparenten Metallschicht, einer metallischen Spiegelschicht und einer dazwischen befindlichen dielektrischen Abstandschicht. Unterschiedliche Farben bei senkrechter Betrachtung und für schräge Betrachtung unter 45° liefert das Schichtsystem von 7 nm Chrom und 340 nm Siliziumdioxid auf 60 nm Aluminium. Eine solche Struktur ist zudem vorzugsweise in eine PET-Folie mit Brechzahl n=1,6 eingebettet. Sie erscheint bei den beiden Betrachtungswinkeln entweder gelb oder blau. Eine solche Beschichtung sieht ein Betrachter in Reflexion grün, wenn sie sich über Mikrokavitäten mit einem Aspektverhältnis von größer als etwa 0,35 befindet. Somit hängt der Farbeindruck vom Aspektverhältnis ab, was eine entsprechende Motivgestaltung ermöglicht.

Halbtranstransparente Beschichtungen wie z. B. das Schichtsystem 15 nm Aluminium/ 75 nm ZnS/ 15 nm Aluminium eignen sich besonders dann, wenn neben einer Betrachtungsmöglichkeit in Reflexion auch eine Bildbetrachtung in Transmission gewünscht ist. Solche Ausgestaltungen finden insbesondere in Durchsichtsfenstern von Banknoten Anwendung.

Die Mikrobilder können alternativ zur Verwendung mit Linsen auch versteckte Informationen, z. B. Mikroschrift, Seriennummern, Symbole, etc., welche mit einem unbewaffneten Auge nicht ausgelöst werden können, auf einem Wertdokument niederlegen. Die Mikrobilder haben vorteilhafterweise wesentlich kleinere Strukturen als bekannte Lasergravuren.

Natürlich können die beschriebenen Mikrobilder auch ohne die in den Figuren gezeichneten Minilinsen und Vergrößerungsanordnungen verwendet werden. Die Verwendung der Mikrokavitäten erlaubt dann eine sehr feine Strukturierung von Bildern oder Motiven, die mit herkömmlichen Druckverfahren nicht möglich ist.

### Bezugszeichenliste:

- 1: Mikrokavitätenstruktur
- 2: Substrat
- 3: Mikrokavität
- 4, 4.1, 4.2: Strahlung
- 5, 5.1, 5.2: Strahlung
- 6: Linse
- 7a, b, c, d: Bereich
- 8: Richtung
- 9: Mikrobild
- 10: Sicherheitselement
- 11: Pixel
- 12: Motiv
- 13: Rand
- 14: Sub-Wellenlängenstruktur
- 15: Beschichtung
- OA: optische Achse
- θ₁, θ₂: Winkel

## Patentansprüche

1. Zur Betrachtung im Auflicht ausgebildetes Sicherheitselement zur Herstellung von Wertdokumenten, wie Banknoten, Schecks oder dergleichen, das eine Oberseite aufweist, die mehrere Mikrobilder (9) bereitstellt, wobei
- jedes der mehreren Mikrobilder (9) jeweils zur Betrachtung im Auflicht mit einer darüber liegenden Linse (6) einer Linsenanordnung ausgebildet ist,
- jedes der mehreren Mikrobilder (9) jeweils durch eine Mikrokavitätenstruktur (1) gebildet ist, die eine Vielzahl nebeneinanderliegender Mikrokavitäten (3) aufweist, wobei
- die Mikrokavitäten (3) jeweils in einer zur Oberseite parallel liegenden Raumrichtung eine Ausdehnung von 0,5 µm bis 3 µm aufweisen,
- die Mikrokavitätenstruktur (1) an ihrer Oberfläche optisch reflektierend oder hoch brechend ist, so dass an der Oberfläche zumindest teilweise Reflexion stattfindet, und
- für jedes Mikrobild (9) Mikrokavitäten (3) mindestens einer ersten und einer zweiten Art vorhanden sind, die sich hinsichtlich eines Aspektverhältnisses der Mikrokavitäten (3) unterscheiden, wodurch jedes Mikrobild (9) durch die mindestens zwei verschiedenen Arten von Mikrokavitäten (3) strukturiert ist, wobei die Mikrokavitäten (3) der ersten und der zweiten Art sich hinsichtlich ihres Rückstreuverhaltens unterscheiden.

2. Sicherheitselement nach Anspruch 1, **dadurch gekennzeichnet, dass** das Aspektverhältnis der Mikrokavitäten (3) in der Mikrokavitätenstruktur (1) gemäß einem das Mikrobild (9) definierenden, vorbestimmten Muster variiert.

3. Sicherheitselement nach Anspruch 1 oder 2, **dadurch gekennzeichnet, dass** mehrere Mikrokavitäten (3) der ersten Art nebeneinanderliegend angeordnet sind, um einen ersten Bildbereich des Mikrobildes (9) zu bilden.

4. Sicherheitselement nach einem der Ansprüche 1 bis 3, **dadurch gekennzeichnet, dass** über den Mikrobildern (9) eine Anordnung aus Linsen (6) ausgebildet und jedem Mikrobild (9) eine Linse (6) zugeordnet ist.

5. Sicherheitselement nach einem der Ansprüche 1 bis 4, **dadurch gekennzeichnet, dass** für die Mikrobilder (9) zusätzlich Sub-Wellenlängenstrukturen (14) vorgesehen sind, die ein Bildelement, insbesondere einen dunklen Hintergrund bereitstellen, und/oder dass für die Mikrobilder (9) zusätzlich Bereiche mit unstrukturierter oder quasi-statistisch strukturierter Oberfläche vorgesehen sind, die ein Bildelement, insbesondere einen reflektierenden Hintergrund bereitstellen.

6. Sicherheitselement nach einem der Ansprüche 1 bis 5, **dadurch gekennzeichnet, dass** die die Mikrokavitäten (3) begrenzenden Kanten auch Kanten eines Motivs (12) des Mikrobildes (9) bilden.

7. Sicherheitselement nach einem der Ansprüche 1 bis 6, **dadurch gekennzeichnet, dass** die Mikrokavitäten (3) nicht-rotationssymmetrisch, insbesondere rinnenförmig sind, und sich jeweils entlang einer Richtung (8) erstrecken, wobei die zwei Arten sich auch hinsichtlich der Richtung (8) unterscheiden, und/oder dass die Ausdehnung, welche die Mikrokavitäten (3) in der zur Oberseite parallel liegenden Raumrichtung haben, längs dieser Raumrichtung variiert, bevorzugt gemäß einer vorbestimmten Funktion.

8. Sicherheitselement nach einem der Ansprüche 1 bis 7, **dadurch gekennzeichnet, dass** die Mikrokavitäten (3) mit einer einen Farbeffekt bewirkenden Struktur (13) versehen sind, insbesondere einem Interferenzschichtaufbau.

9. Wertdokument mit einem Sicherheitselement (10) nach einem der Ansprüche 1 bis 8.

10. Herstellungsverfahren für ein zur Betrachtung im Auflicht ausgebildetes Sicherheitselement (10) für Wertdokumente, wie Banknoten, Schecks oder dergleichen, wobei ein Substrat (2) bereitgestellt wird, das eine Oberseite aufweist, und auf der Oberseite mehrere Mikrobilder (9) erzeugt werden, wobei
- jedes der mehreren Mikrobilder (9) jeweils zur Betrachtung im Auflicht mit einer darüber liegenden Linse (6) einer Linsenanordnung ausgebildet wird,
- jedes der mehreren Mikrobilder (9) jeweils durch eine Mikrokavitätenstruktur (1) gebildet wird, die eine Vielzahl nebeneinanderliegender Mikrokavitäten (3) aufweist, wobei
- die Mikrokavitäten (3) jeweils in einer zur Oberseite parallel liegenden Raumrichtung mit einer Ausdehnung von 0,5 µm bis 3 µm versehen werden,
- die Mikrokavitätenstruktur (1) an ihrer Oberfläche optisch reflektierend oder hoch brechend ausgebildet wird, so dass an der Oberfläche zumindest teilweise Reflexion stattfindet, und
- für jedes Mikrobild (9) Mikrokavitäten (3) mindestens einer ersten und einer zweiten Art vorgesehen werden, welche sich durch ein Aspektverhältnis der Mikrokavitäten (3) unterscheiden, wodurch jedes Mikrobild (9) durch die mindestens zwei verschiedenen Arten von Mikrokavitäten (3) strukturiert wird, wobei die Mikrokavitäten (3) der ersten und der zweiten Art sich hinsichtlich ihres Rückstreuverhaltens unterscheiden.

11. Herstellungsverfahren nach Anspruch 10, **dadurch gekennzeichnet, dass** das Mikrobild definiert wird, indem das Aspektverhältnis der Mikrokavitäten (3) in der Mikrokavitätenstruktur (1) gemäß einem vorbestimmten Muster variiert wird.

12. Herstellungsverfahren nach Anspruch 10 oder 11, **dadurch gekennzeichnet, dass** mehrere Mikrokavitäten (3) der ersten Art nebeneinanderliegend angeordnet werden, um einen ersten Bildbereich des Mikrobildes (9) zu bilden.

13. Herstellungsverfahren nach einem der Ansprüche 10 bis 12, **dadurch gekennzeichnet, dass** für die Mikrobilder (9) zusätzlich Sub-Wellenlängenstrukturen (14) ausgebildet werden, welche ein Bildelement, insbesondere einen dunklen Hintergrund bereitstellen, und/oder dass für die Mikrobilder (9) zusätzlich Bereiche mit unstrukturierter Oberfläche ausgebildet werden, die ein Bildelement, insbesondere einen reflektierenden Hintergrund bereitstellen.

14. Herstellungsverfahren nach einem der Ansprüche 10 bis 13, **dadurch gekennzeichnet, dass** die die Mikrokavitäten (3) begrenzenden Kanten als Kanten (13) eines Motivs (12) des Mikrobildes (9) ausgebildet werden.

15. Herstellungsverfahren nach einem der Ansprüche 10 bis 14, **dadurch gekennzeichnet, dass** die Mikrokavitäten (3) nicht-rotationssymmetrisch, insbesondere rinnenförmig, ausgebildet werden, und sich jeweils entlang einer Richtung (8) erstrecken, wobei die zwei Arten sich auch hinsichtlich der Richtung unterscheiden.

16. Herstellungsverfahren nach einem der Ansprüche 10 bis 15, **dadurch gekennzeichnet, dass** die Mikrokavitäten (3) mit einer einen Farbeffekt bewirkenden Struktur (13) versehen werden, insbesondere einem Interferenzschichtaufbau.

## Claims

1. A security element configured for viewing in incident light and for manufacture of value documents, such as banknotes, checks or the like, the security element comprising an upper side that makes available several micro images (9), wherein
- each of the several micro images (9) is formed to be viewed in incident light through a lens (6) of a lens arrangement arranged thereabove,
- each of the several micro images (9) is formed by a micro cavity structure (1) comprising a plurality of micro cavities (3) disposed side by side, wherein
- the micro cavities (3) each comprise an extension of 0.5 µm to 3 µm respectively in a spatial direction parallel to the upper side,
- the micro cavity structure (1) is optically reflective or highly refractive on its surface, so that at least partial reflection takes place on the surface, and
- for each micro image (9) micro cavities (3) of at least a first and a second type are present, which differ with regard to an aspect ratio of the micro cavities (3), whereby each micro image (9) is structured by the at least two different types of micro cavities (3), wherein the micro cavities (3) of the first and the second type differ with regard to their backscattering properties.

2. The security element according to claim 1, **characterized in that** the aspect ratio of the micro cavities (3) in the micro cavity structure (1) varies in accordance with a predetermined pattern defining the micro image (9).

3. The security element according to claim 1 or 2, **characterized in that** several micro cavities (3) of the first type are arranged side by side in order to form a first image region of the micro image (9).

4. The security element according to any of claims 1 to 3, **characterized in that** an arrangement of lenses (6) is formed above the micro images (9) and that one lens (6) is allocated to each micro image (9).

5. The security element according to any of claims 1 to 4, **characterized in that** additionally sub-wavelength structures (14) are provided for the micro images (9), which structures (14) provide an image element, in particular a dark background, and/or that additionally regions with unstructured or quasi-statistically structured surface are provided for the micro images (9), which regions provide an image element, in particular a reflecting background.

6. The security element according to any of claims 1 to 5, **characterized in that** the edges limiting the micro cavities (3) also form edges of a motif (12) of the micro image (9).

7. The security element according to any of claims 1 to 6, **characterized in that** the micro cavities (3) are non-rotationally symmetric, in particular channel-shaped, and extend each along a direction (8), wherein the two types also differ with regard to the direction (8) and/or that the extension of the micro cavities (3) in the spatial direction parallel to the upper side varies along said spatial direction in accordance with a predetermined function.

8. The security element according to any of claims 1 to 7, **characterized in that** the micro cavities (3) are provided with a structure (13) effecting a color effect, in particular with an interference layer structure.

9. A document of value having a security element (10) according to any of claims 1 to 8.

10. A method of manufacturing a security element (10) configured for viewing in incident light and for value documents, such as banknotes, checks or the like, wherein a substrate (2) is made available that has an upper side, and on the upper side several micro images (9) are produced, wherein
- each of the several micro images (9) is formed to be viewed in incident light through a lens (6) of a lens arrangement arranged thereabove,
- each of the several micro images (9) is formed by a micro cavity structure (1) comprising a plurality of micro cavities (3) disposed side by side, wherein
- the micro cavities (3) are each formed with an extension of 0.5 µm to 3 µm respectively in a spatial direction parallel to the upper side,
- the micro cavity structure (1) is formed to be optically reflective or highly refractive on its surface, so that at least partial reflection takes place on the surface, and
- for each micro image (9) micro cavities (3) of at least a first and a second type are provided, which differ with regard to an aspect ratio of the micro cavities (3), whereby each micro image (9) is structured by the at least two different types of micro cavities (3), wherein the micro cavities (3) of the first and the second type differ with regard to their backscattering properties.

11. The manufacturing method according to claim 10, **characterized in that** the micro image is defined by varying the aspect ratio of the micro cavities (3) in the micro cavity structure (1) in accordance with a predetermined pattern.

12. The manufacturing method according to claim 10 or 11, **characterized in that** several micro cavities (3) of the first type are arranged side by side in order to form a first image region of the micro image (9).

13. The manufacturing method according to any of claims 10 to 12, **characterized in that** additionally sub-wavelength structures (14) are formed for the micro images (9), which structures (14) provide an image element, in particular a dark background, and/or that additionally regions with unstructured surface are formed for the micro images (9), which regions provide an image element, in particular a reflecting background.

14. The manufacturing method according to any of claims 10 to 13, **characterized in that** the edges limiting the micro cavities (3) are configured as edges (13) of a motif (12) of the micro image (9).

15. The manufacturing method according to any of claims 10 to 14, **characterized in that** the micro cavities (3) are configured to be non-rotationally symmetric, in particular channel-shaped, and extend each along a direction (8), wherein the two types also differ with regard to the direction.

16. The manufacturing method according to any of claims 10 to 15, **characterized in that** the micro cavities (3) are provided with a structure (13) effecting a color effect, in particular with an interference layer structure.

## Revendications

1. Élément de sécurité conçu pour être vu en lumière incidente pour la fabrication de documents de valeur tels que des billets de banque, des chèques ou similaires, qui présente une face supérieure dotée de multiples micro-images (9), dans lequel
- chacune des multiples micro-images (9) est respectivement conçue pour être vue en lumière incidente à l'aide d'une lentille (6), disposée au-dessus de celle-ci, d'un groupement de lentilles,
- chacune des multiples micro-images (9) est respectivement formée par une structure à microcavités (1) qui présente une pluralité de microcavités (3) juxtaposées, dans lequel
- les microcavités (3) présentent chacune une extension de 0,5 µm à 3 µm dans une direction spatiale parallèle à la face supérieure,
- la structure à microcavités (1) possède une surface optiquement réfléchissante ou hautement réfringente telle qu'une réflexion au moins partielle se produit sur cette surface, et
- pour chaque micro-image (9), il existe des microcavités (3) d'au moins un premier et d'un deuxième type qui se distinguent par un rapport d'aspect des microcavités (3), chaque micro-image (9) étant ainsi structurée par lesdits au moins deux types différents de microcavités (3), dans lequel les microcavités (3) du premier type et du deuxième type se distinguent par leur comportement en rétrodiffusion.

2. Élément de sécurité selon la revendication 1, **caractérisé en ce que** le rapport d'aspect des microcavités (3) dans la structure à microcavités (1) varie selon un motif prédéterminé définissant la micro-image (9).

3. Élément de sécurité selon la revendication 1 ou 2, **caractérisé en ce que** de multiples microcavités (3) du premier type sont juxtaposées pour former une première zone d'image de la micro-image (9).

4. Élément de sécurité selon l'une quelconque des revendications 1 à 3, **caractérisé en ce qu'**un réseau de lentilles (6) est formé au-dessus des micro-images (9) et une lentille (6) est associée à chaque micro-image (9).

5. Élément de sécurité selon l'une quelconque des revendications 1 à 4, **caractérisé en ce qu'**il est en outre prévu pour les micro-images (9) des structures sub-longueur d'onde (14) qui fournissent un élément d'image, en particulier un arrière-plan sombre, et/ou **en ce qu'**il est en outre prévu pour les micro-images (9) des zones dotées de surfaces non structurées ou quasi-statistiquement structurées, qui fournissent un élément d'image, en particulier un arrière-plan réfléchissant.

6. Élément de sécurité selon l'une quelconque des revendications 1 à 5, **caractérisé en ce que** les bords délimitant les microcavités (3) forment également des bords d'un motif (12) de la micro-image (9).

7. Élément de sécurité selon l'une quelconque des revendications 1 à 6, **caractérisé en ce que** les microcavités (3) sont non symétriques de rotation, en particulier en forme de canal, et s'étendent respectivement le long d'une direction (8), dans lequel les deux types se distinguent également en ce qui concerne ladite direction (8), et/ou **en ce que** l'étendue qu'ont les microcavités (3) dans la direction spatiale parallèle à la face supérieure varie le long de ladite direction spatiale, de préférence selon une fonction prédéterminée.

8. Élément de sécurité selon l'une quelconque des revendications 1 à 7, **caractérisé en ce que** les microcavités (3) sont dotées d'une structure (13) produisant un effet de coloration, en particulier d'une structure de couche d'interférence.

9. Document de valeur comprenant un élément de sécurité (10) selon l'une quelconque des revendications 1 à 8.

10. Procédé de fabrication d'un élément de sécurité (10) conçu pour être vu en lumière incidente pour des documents de valeur, tels que des billets de banque, des chèques ou similaires, dans lequel il est prévu un substrat (2) présentant une face supérieure, et de multiples micro-images (9) sont créées sur ladite face supérieure, dans lequel
- chacune des multiples micro-images (9) est respectivement conçue pour être vue en lumière incidente à l'aide d'une lentille (6), disposée au-dessus de celle-ci, d'un groupement de lentilles,
- chacune des multiples micro-images (9) est respectivement formée par une structure à microcavités (1) qui présente une pluralité de microcavités (3) juxtaposées, dans lequel
- les microcavités (3) sont respectivement pourvues d'une extension de 0,5 µm à 3 µm dans une direction spatiale parallèle à la face supérieure,
- la structure à microcavités (1) est conçue de manière à posséder une surface optiquement réfléchissante ou hautement réfringente telle qu'une réflexion au moins partielle se produit sur cette surface, et
- pour chaque micro-image (9), il existe des microcavités (3) d'au moins un premier type et d'un deuxième type qui se distinguent par un rapport d'aspect des microcavités (3), chaque micro-image (9) étant ainsi structurée par lesdits au moins deux types différents de microcavités (3), dans lequel les microcavités (3) du premier type et du deuxième type se distinguent par leur comportement en rétrodiffusion.

11. Procédé de fabrication selon la revendication 10, **caractérisé en ce que** la micro-image est définie en faisant varier le rapport d'aspect des microcavités (3) dans la structure à microcavités (1) selon un motif prédéterminé.

12. Procédé de fabrication selon la revendication 10 ou 11, **caractérisé en ce que** de multiples microcavités (3) du premier type sont juxtaposées pour former une première zone d'image de la micro-image (9).

13. Procédé de fabrication selon l'une quelconque des revendications 10 à 12, **caractérisé en ce qu'**il est en outre réalisé pour les micro-images (9) des structures sub-longueur d'onde (14) qui fournissent un élément d'image, en particulier un arrière-plan sombre, et/ ou **en ce qu'**il est en outre réalisé pour les micro-images (9) des zones dotées de surfaces non structurées qui constituent un élément d'image, en particulier un arrière-plan réfléchissant.

14. Procédé de fabrication selon l'une quelconque des revendications 10 à 13, **caractérisé en ce que** les bords délimitant les microcavités (3) sont réalisés sous forme de bords (13) d'un motif (12) de la micro-image (9).

15. Procédé de fabrication selon l'une quelconque des revendications 10 à 14, **caractérisé en ce que** les microcavités (3) sont réalisées de manière non symétrique de rotation, en particulier en forme de canal, et s'étendent respectivement le long d'une direction (8), dans lequel les deux types se distinguent également en ce qui concerne ladite direction.

16. Procédé de fabrication selon l'une quelconque des revendications 10 à 15, **caractérisé en ce que** les microcavités (3) sont dotées d'une structure (13) produisant un effet de coloration, en particulier d'une structure de couche d'interférence.
